# EUROPEAN PATENT SPECIFICATION

(11) **EP 4 632 018 B1**
(45) Date of publication and mention of the grant of the patent: **08.07.2026**
(21) Application number: 24206907.8
(22) Date of filing: 16.10.2024
(51) Int. Cl.: C09D 5/00

(54) **GLOSS FINISH PRIMER AND METHOD FOR COATING A SUPERYACHT**
GLANZDECKGRUNDIERUNG UND VERFAHREN ZUR BESCHICHTUNG EINER SUPERYACHT
APPRÊT DE FINITION BRILLANT ET PROCÉDÉ DE REVÊTEMENT D'UN SUPER-JAUGE

(43) Date of publication of application: 15.10.2025
(73) Proprietor: Akzo Nobel Coatings International B.V., 1077 WW Amsterdam (NL)
(72) Inventor: TROGÉ, Alexandre Xavier Jérôme, 1077 WW Amsterdam (NL); THOMAS, Gareth Stephen, 1077 WW Amsterdam (NL)
(74) Representative: Akzo Nobel IP Department

(56) References cited:
- CN-A- 101 137 498
- JP-A- 2005 205 787
- JP-A- 2007 077 346
- JP-A- 2021 194 381
- JP-A- 2023 080 776

## Description

### FIELD OF THE INVENTION

The present invention relates to a gloss finish primer (GFP) for use in coating of a superyacht. The present invention moreover relates to a method for coating a superyacht.

### Background

The coating of superyachts is a complex and meticulous process that ensures both aesthetic appeal and protection against environmental and mechanical stressors. Traditional superyacht coating systems typically involve a multi-layer approach consisting of several distinct layers, each serving a specific purpose to achieve the desired finish and durability.

The conventional coating process begins with the application of an anti-corrosive primer. This foundational layer is essential for protecting the yacht's surface from corrosion caused by exposure to moisture, salt, and other environmental elements. Following the primer, a profiling filler is applied to address surface imperfections and create a smooth base. Generally, after curing there is a sanding step. This profiling filler is often succeeded by a finishing filler, which further refines the surface and enhances the overall smoothness. This coating layer is generally cured and thereafter sanded for smoothness.

Once the filler layers are adequately applied and cured and sanded for smoothness, a high build (or sealing) primer is used to seal the filler to avoid residual solvent leaching through to outer layers, and to fill any scratches from the fairing compound in order to provide a smoother finish. The undercoat is then applied which, after curing, ensures an even base for the final showcoat and topcoat. Evenness is enhanced by sanding the build primer and the undercoat before application of the subsequent showcoat and topcoat. The showcoat is used to show any defects in the system. If acceptable, the showcoat is typically sanded down before the topcoat is applied, the topcoat serving as the final protective layer for providing the primary color and visual appeal and offering additional gloss and resistance to environmental factors.

This traditional approach, while effective, is time-consuming due to the need for multiple application and curing stages. Each layer requires careful application and drying times to achieve optimal results, leading to extended production timelines and increased labor costs.

The objective of the present invention is to streamline this complex process by developing a superyacht coating that reduces the time required for application while maintaining or enhancing the protective and aesthetic qualities of the finish, particularly for a newly-built vessel.

CN101137498 relates to an ornamental film that can be used, for example, as an armouring or protective member for automobiles. JP2005/205787 relates to a decorative film having a coloured layer having a continuously varying concentration. JP2007/077346 relates to a composite material having dispersed particles with a particle size of 50-800 nm. JP2023/080776 relates to a paint replacement film that is suitable for being applied to a curved substrate.

### Objects

It is an object of the present invention to provide an improved superyacht coating and a method of coating a superyacht that can be carried out in less time. It is a further object of the present invention to provide a gloss finish primer (GFP) that can replace the undercoat and showcoat and that can be applied in less time than these two layers.

### STATEMENT OF THE INVENTION

In a first aspect, the invention relates to a gloss finish primer (GFP) for use in coating a superyacht, wherein the GFP comprises a) an acrylic polyol as a binder resin, b) a pigment and c) an isocyanate as a curing agent; and wherein the GFP complies with the following requirements: i) a gloss at 60° measured on two dried layers of GFP according to ISO 2813:2014 of at least 80 gloss units (GU), and ii) a distinction of image (DOI) measured on two dried layers of GFP measured according to ASTM 430:2019 of at least 80.

In a second aspect, the invention relates to a method for coating a superyacht, the method comprising the successive steps of a) providing a superyacht with a high build primer as an outer coating layer; b) optionally applying an undercoat layer;
c) applying a coating layer of the gloss finish primer (GFP) according to the first aspect of the invention; and d) applying a coating layer of a topcoat to obtain a superyacht having a superyacht coating.

The second aspect of the invention can also relate to a method for coating a superyacht comprising the successive steps of: A) applying a coating layer of an anti-corrosive primer; B) applying a coating layer of a profiling filler; C) optionally applying a coating layer of a finishing filler; D) applying a coating layer of a high build primer; E) applying a coating layer of the gloss finish primer (GFP) according to the first aspect of the invention; and F) applying a coating layer of a topcoat to obtain a superyacht coating.

Corresponding embodiments of the gloss finish primer are also applicable for the method according to the present invention and vice versa.

It was surprisingly found that the GFP and the method of the invention provide a multilayer coated superyacht with desired surface appearance comparable to that of a multilayer coated superyacht made using undercoat and showcoat in less time. It was found that the GFP as defined above achieves such desired surface appearance.

The invention is particularly suitable for new-builds, i.e. newly-built superyachts and for refurbishment, i.e. where a coating system is partly or fully removed and a partial or complete new coating system is applied. It is generally suitable for coating part of or all of the above-waterline external surface of the superyacht, for example part of or all of the above-waterline surface of the hull and/or the external surface of the above-deck superstructure.

### DETAILED DESCRIPTION

The present invention is elucidated below with a detailed description.

### List of definitions

The following definitions are used in the present description and claims to define the stated subject matter. Other terms not cited below are meant to have the generally accepted meaning in the field.

"gloss finish primer" or "GFP" as used in the present description means: a coating that replaces traditional undercoat and (sacrificial) showcoat that is able to visually highlight defects/imperfections and does not need to be removed before applying the topcoat.

"superyacht coating" as used in the present description means: a full scheme of coating layers that are applied to a superyacht; each of which is generally cured (and/or dried) before addition of the subsequent layer. Each layer can be sanded before applying subsequent layers. The layers may include one or more layers of any of the following: anti-corrosive primer; profiling filler; finishing filler; high build primer; gloss finish primer (GFP), undercoat, showcoat, topcoat.

"superyacht" as used in the present description means: a large yacht having a length of at least 24 meter (according to ISO 8666:2020 small crafts are up to 24 m).

"anti-corrosive primer" or "primer" as used in the present description means: a foundational coating layer used to protect the superyacht's surface from corrosion caused by exposure to moisture, salt, and other environmental elements. It is also referred to as a holding primer because it can be present on the metal (parts) of the superyacht when these are in transit.

"profiling filler" as used in the present description means: a coating layer that is used to fill any imperfections of the superyacht's surface and to create a smooth base for the following coating layers. It is used for fairing of surfaces and may be applied in layers of up to one inch (2.54 cm) thick. It has good sanding properties. It is possible that multiple rounds of application of profiling filler, curing/drying and sanding are applied to provide the required smooth surfaces/curves.

"finishing filler" as used in the present description means: a coating layer that further refines the surface and enhances the overall smoothness. It is also referred to as surfacing filler. It can be used to fill up any scratches or pinholes remaining after sanding of the profiling filler.

"high build primer" or "sealing primer" as used in the present description means: a coating layer that is used to fill any scratches from the fairing compound in order to provide a smoother finish. It can also provide additional thickness and improve adhesion for subsequent coating layers. This coating layer also acts as a sealant layer of barrier for any solvent in the filler layers to penetrate through to the later coating layers, which could cause imperfections in the finished look of the coating.

"undercoat" as used in the present description means: a coating layer that ensures an even base for the showcoat. Undercoat has good hide and sanding properties and sufficient flow to ensure a smooth finish.

"showcoat" as used in the present description means: a coating layer that is used to show any defects in the system before topcoat is applied.

"topcoat" as used in the present description means: a coating layer that provides a final protective layer, for providing the primary color and visual appeal and offering additional gloss and resistance to environmental factors.

"distinction of image" or "distinctness of image" or "DOI" as used in the present description means: a measure of how sharply a reflected image appears on the coated surface. This is a value between zero and 100, where values closer to 100 represent a sharper reflected image. A higher number is desirable for superyacht coatings for which a high gloss visual appearance is desired.

"gloss at 60°" or "60° gloss" as used in the present description means: the gloss of a coating at a 60° viewing angle. This is a value between zero and 100 and the closer to 100 the more gloss the surface has. The gloss is independent of colour. A higher number is desirable for superyacht coatings for which a high gloss visual appearance is desired. Gloss can be determined according to ISO 2813:2014.

"DOI loss" as used in the present description means: the increase in surface texture of the superyacht coating over time. It is measured as a reduction of the DOI over a certain test period. DOI and DOI loss can be determined by ASTM E430:2019.

### Anti-corrosive primer

As anti-corrosive primer (ACP), commercially available anti-corrosive primers may be used. The ACP may comprise as a binder an epoxy resin, such as a high molecular weight epoxy (e.g. of the 1004 type), and can be supplied for example as a two-component epoxy/amine coating composition. The ACP generally comprises fillers of the platelet type, such as talc and mica platelets. Suitable examples of the anti-corrosive primer are well-known and are described e.g. in WO2011/092278 and US20120025142. A suitable commercial example is AWLGRIP^{™} Hullgard^{™} Extra available from International Paint.

After curing and/or drying, the coating layer can have a dry film thickness (dft) in the range of from 50 to 200 µm before or after any sanding. Such coating thickness can be achieved by applying one coating or multiple coatings. In embodiments, the ACP can be applied by airless or conventional spraying, or by brush or roller.

### Profiling filler

As profiling filler (PF), commercially available profiling fillers may be used. The PF may comprise as a binder an epoxy resin, and can be supplied for example as a two-component epoxy/amine coating composition. It may comprise fillers such as microspheres. Suitable examples of the profiling filler are well-known, a suitable commercial example being AWLGRIP^{™} Awlfair^{™} LW Standard available from International Paint.

After curing and/or drying, the coating layer can have a dry film thickness (dft) in the range of from 5000 to 50000 µm before or after any sanding. Such coating thickness can be achieved by applying one coating, or multiple coatings each having a thickness in the range of from 1000 to 20000 µm, e.g. from 2000 to 6000 µm. In embodiments, the PF can be applied by batten, trowel or knife.

### Finishing filler

As finishing filler (FF), commercially available finishing fillers may be used. The FF may comprise as a binder an epoxy resin, and can be supplied for example as a two-component epoxy/amine coating composition. Suitable examples of the finishing filler are well-known, a suitable commercial example being AWLGRIP^{™} Awlfair^{™} Surfacing Filler available from International Paint.

After curing and/or drying, the coating layer can have a dry film thickness (dft) in the range of from 50 to 3000 µm, e.g. from 50 to 500 µm, before or after any sanding. Such coating thickness can be achieved by applying one coating or multiple coatings. In embodiments, the FF is applied by trowel, spatula, batten or putty knife.

### High build primer / sealing primer

As high build primer (HBP), commercially available primers may be used. The HBP may comprise as a binder an epoxy resin, for example a 1001 type solid epoxy resin, and can be suppled for example as a two-component epoxy/amine coating composition. It may comprise as fillers barytes or talc. The HBP may have a solid content in the range of from 45 to 75 % volume solids, e.g. from 60 to 70 % volume solids.

Suitable examples of the high build primer are well-known and are described e.g. in US2021/0362180. A suitable commercial example is AWLGRIP^{™} High Build Epoxy Primer available from International Paint.

After curing and/or drying, the coating layer can have a dry film thickness (dft) in the range of from 125 to 750 µm, e.g. from 250 to 500 µm, before or after any sanding. Such coating thickness can be achieved by applying one coating or multiple coatings.

### Topcoat

As topcoat (TP), commercially available topcoats may be used. The topcoat may comprise as a binder polyester resin or acrylic resin. The topcoat may have a solid content of 30 to 50 % volume solids. Suitable commercial examples include Awlgrip^{™} Topcoat, Awlcraft^{™} 3000 and Awlgrip^{™} HDT.

After curing and/or drying, the coating layer can have a dry film thickness (dft) of between 40 µm and 100 µm before or after any sanding. Such coating thickness can be achieved by applying one coating or multiple coatings.

### Gloss finish primer

The gloss finish primer is the subject of the present invention. It comprises at least a binder (generally a clear binder), a pigment and a curing agent. The GFP can be suppled as a two-component coating composition comprising one component having a binder and one component having a curing agent. The pigment can be in either one or both of the two components.

In addition, it may comprise one or more additional components selected from activators (e.g. activated reducers), thinners, fillers, wetting agents, dispersing agents, flow additives, rheology control agents, adhesion promoters, antioxidants, UV stabilizers, organic solvents, organic polymers, reactive diluents, plasticizers and catalysts.

As will be shown in the experimental section, the present inventors have reviewed compositions for GFP with epoxy resins (see GFP1, GFP6, and GFP8 below) but have found that the 60° gloss is insufficient and/or the DOI is insufficient. In addition, the present inventors have reviewed compositions for GFP with non-acrylic polyurethane resins but have found that the DOI or the standability is insufficient (see GFP7 below). In addition, the present inventors have reviewed compositions for GFP with acrylic polysiloxane resins but have found that that the 60° gloss and the DOI are insufficient (see GFP5 below). In addition, the present inventors have reviewed compositions for GFP with epoxy-acrylic resin but have found that 60° gloss and the DOI are insufficient (see GFP4 below).

In an embodiment, the GFP complies with the requirement of the amount of volatile organic compounds (VOC) of less than 420 grams per liter (g/l).

In an embodiment, the GFP (after curing) complies with the following requirements:
i) a gloss at 60° measured on two dried layers of GFP according to ISO 2813:2014 of at least 85 gloss units (GU), and/or
ii) a distinction of image (DOI) measured on two dried layers of GFP according to ASTM E430:2019 of at least 85.

After curing and/or drying, the coating layer has a dry film thickness (dft) in the range of from 50 to 200 µm before or after any sanding. Such coating thickness can be achieved by applying one coating or multiple coatings.

### Binder

The binder resin according to the invention is an acrylic polyol resin. There can be one or more acrylic polyol resins. In embodiments, they have a hydroxyl number in the range of from 50 to 300 mg KOH / g. In embodiments, they have a weight average molecular weight in the range of from 2000 to 150000, for example in the range of from 3000 to 45000, or from 5000 to 20000.

Acrylic polyol resins can be made from one or more monomers selected from C₁-C₂₀ (cyclo)alkyl (meth)acrylate, C₁-C₁₀ hydroxyalkyl (meth)acrylate and vinyl aromatic monomers. At least one type of hydroxyalkyl (meth)acrylate is included in the acrylic polyol. The term acrylic polyol includes acrylic diols.

The C₁-C₂₀ (cyclo)alkyl (meth)acrylate may be selected from C₁-C₂₀ alkyl (meth)acrylates and C₃-C₂₀ cycloalkyl (meth)acrylates.

The C₁-C₂₀ (cyclo)alkyl (meth)acrylate may be selected from methyl (meth)acrylate, ethyl (meth)acrylate, n-butyl (meth)acrylate, isobutyl (meth)acrylate, 2-ethylhexyl (meth)acrylate, cyclohexyl acrylate, lauryl (meth)acrylate, stearyl (meth)acrylate, eicosyl (meth)acrylate, cetyl (meth)acrylate and tridecyl (meth)acrylate, and mixtures of any two or more thereof.

The C₁-C₁₀ hydroxyalkyl methacrylate may be selected from hydroxyethyl acrylate, 2-hydroxypropyl acrylate, 3-hydroxypropyl acrylate, 2-hydroxybutyl acrylate, 4-hydroxybutyl acrylate, 3-hydroxypentyl acrylate, 6-hydroxynonyl acrylate, hydroxyethyl methacrylate, 2-hydroxypropyl methacrylate, 3-hydroxypropyl methacrylate, 2-hydroxybutyl methacrylate, 2-hydroxypentyl methacrylate, 5-hydroxypentyl methacrylate, 7-hydroxyheptyl methacrylate and 5-hydroxydecyl methacrylate, and mixtures of any two or more thereof.

Vinyl aromatic monomers may be selected from the group consisting of styrene, α-methylstyrene, α-ethylstyrene and other α-alkyl substituted styrenes, vinyl toluene and mixtures of any two or more thereof. In embodiments, vinyl aromatic monomers are selected from styrene.

### Pigment

The GFP comprises a pigment. In preferred embodiments the pigment is provided as a toner comprising the pigment dispersed in a resin, e.g. an acrylic resin or polyester resin. The use of a resin for dispersing the pigment, i.e. the use of a toner resin, improves gloss and DOI. In an embodiment, the pigment is a white pigment and the GFP has a pigment volume concentration (PVC) of between 18.0 and 30.0%. The GFP according to the invention preferably has a PVC of between 18.0 and 25.0%, more preferably between 18.0 and 22.0%, for white pigments. The inventors have found that with a PVC outside of this range, less optimal results are achieved, that the gloss at 60° is insufficient and/or the DOI is insufficient (see GFP2, GFP3 and GFP5 below). In an embodiment, the pigment may be a titanium oxide white pigment that is known to the person skilled in the art.

In an embodiment, the pigment is a non-white pigment, for example a blue pigment or a black pigment, and wherein the GFP has a pigment volume concentration (PVC) of between 3.0 and 7.0 %. In an embodiment, the pigment may be an iron black, carbon black, yellow iron oxide, phthalocyanine blue pigment that are known to the person skilled in the art.

In an embodiment, the ratio of binder to toner of between 10 : 1 and 1 : 10, for example 5:1 to 1:5. This allows for optimal balance between VOC and opacity of the coating.

### Curing agent

The curing agent is an isocyanate compound which in embodiments comprises at least two isocyanate groups, i.e. the isocyanate compound can be selected from diisocyanates and polyisocyanates. Examples include aliphatic and aromatic di- or polyisocyanates such as diphenylmethane diisocyanate, toluene diisocyanate, hexamethylene diisocyanate, isophorone diisocyanate, their trimers and dimers such as isocyanurates and uretdiones, and any mixtures of two or more thereof. In embodiments, the curing agent is selected from aliphatic polyisocyanate compounds. Examples of commercial products include Tolonate HDT-LV and Desmodur N3200 and their mixtures. After mixing the binder and the curing agent, acrylic polyurethane is obtained.

The curing agent may be provided with a solvent such as MPK (methyl propyl ketone) or MAK (methyl amyl ketone).

### Activator

The activator may be a commercially available activator. It may be in the form of a solution in a solvent such as MPK (methyl propyl ketone) or MAK (methyl amyl ketone).

### Method of the invention

The GFP can be coated directly onto a high build primer, without the need for an undercoat. The high build primer can be part of an old coating scheme, e.g. after sanding down the top layers of an old coating scheme, optionally after suitable repair and sanding. Alternatively, if can be a freshly applied layer, e.g. to replace an old layer or as part of a fresh coating scheme, e.g. for a new-build. A topcoat is then applied to the GFP layer.

Thus, in accordance with the second aspect of the present invention, a method is provided comprising the successive steps of:
a) providing a superyacht with a high build primer as an outer coating layer;
b) optionally applying an undercoat layer;
c) applying a coating layer of the gloss finish primer (GFP) according to the first aspect of the invention; and
d) applying a coating layer of a topcoat to obtain a superyacht coating.

In an embodiment the method further comprises drying and/or curing of the coating layers according to step a) and/or b) and/or c) and/or d), preferably after each step a), b), c), and d) the coating layer is dried and/or cured.

After each coating layer sanding may be carried out. In particular, any one or more of coating layers a), b) and c) can be sanded, and in embodiments all of coating layers a), b) and c) are sanded before the subsequent layer is applied.

Although an undercoat in step b) can be applied, it is not necessary, and a particular advantage of the GFP coating layer is that an undercoat is not required, thereby reducing the complexity of the superyacht coating and the time required to complete the coating process.

In embodiments, the high build primer is part of a fresh coating scheme, e.g. for a newly-built superyacht. Thus, in embodiments, the invention relates to a method for coating a superyacht, the method comprising the successive steps of:
A) optionally applying a coating layer of an anti-corrosive primer;
B) applying a coating layer of a profiling filler;
C) optionally applying a coating layer of a finishing filler;
D) applying a coating layer of a high build primer;
E) applying a coating layer of the gloss finish primer (GFP) according to the first aspect of the invention; and
F) applying a coating layer of a topcoat to obtain a superyacht coating.

Step A) is preferably included where the superyacht has a metallic hull. However, it is not needed where the hull is made from a non-corrodable material, e.g. a composite material such as fiberglass.

In an embodiment the method further comprises drying and/or curing of the coating layers according to step A) and/or B) and/or C) and/or D) and/or E) and/or F), preferably after each step A), B), C), D), E) and F), the coating layer is dried and/or cured.

After each coating layer sanding may be carried out. In particular, after coating layer B), C), D), E) sanding is carried out.

In an embodiment, the superyacht coating obtained in step F) (or after step d)), and after the topcoat is cured, has a distinction of image (DOI) according to ASTM E430:2019 of at least 80, preferably at least 85, more preferably at least 90, most preferably at least 92.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The scope of the present invention is defined by the appended claims. One or more of the objects of the invention are achieved by the appended claims.

### EXAMPLES

The present invention is further elucidated based on the Examples below which are illustrative only and not considered limiting to the present invention.

### Methods

### Distinctness of image (DOI)

DOI was measured using ASTM E430:2019 using a Wave-Scan DOI meter from Byk-Gardner using a laser point light source to illuminate the surface at a 60° angle, and a detector measures the reflected light. The instrument is rolled slowly across the surface to make the measurement for a set path length, set to 100 mm. The instrument measures the surface structure in terms of four parameters that cover increasing wavelength ranges: 1) Wa: 0.1 - 0.3 mm, 2) Wb: 0.3 - 1 mm, 3) Wc: 1-3 mm, and 4) Wd: 3 - 10 mm. In addition, the instrument calculates a long-wave (LW: 1.2 - 12 mm) and a shortwave (SW: 0.3 -1.2 mm) parameter. The instrument also has a second mode, in which a CCD camera detects light diffused by structures smaller than 0.1 mm wavelength as dU, a 'dullness' factor. The 'DOI' parameter is calculated as a function of dU, Wa, and Wb.

### DOI reduction

The change in DOI was measured after 1 month, during which time the temperature was ramped from ambient temperature up to 50 °C. The same time period and temperature ramp conditions were used for each DOI change experiment.

### Gloss at 60°

This specular gloss parameter is measured using ISO2813:2014.

### Sandability

The coating was determined to have sandability as follows: A two-layers coating is prepared and dried for 72 hours. Sanding is performed using a Dual Action (DA) orbital sander with sandpaper grades of P400. Results were compared to existing finish primers and topcoats and compared for speed of sanding (i.e. to remove texture), longevity of sandpaper and clogging of sandpaper. If these were similar to existing finish primers, they were considered to have good sandability.

### Materials

As profiling fillers the following were used:
PF1 Interfill^{™} 830 of International Paint, being a two-component epoxy/amine resin system
PF2 Awlfair^{™} LW standard of International Paint, being a two-component epoxy-amine resin system.

These were provided in a dry film thickness (DFT) of 6 mm.

As finishing fillers the following were used:
FF1 Interfill^{™} 833 of International Paint, being a two-component epoxy/amine resin system. This was provided in a dry film thickness (DFT) of 2 mm.
FF2 Awlfair^{™} Surfacing Filler of International Paint, being a two-component epoxy-amine resin system. This was provided in a dry film thickness (DFT) of less than 0.5 mm.

As high build primer the following were used:
HBP1 AWLGRIP^{™} High Build Epoxy Primer, being a two-component epoxy-amine resin system. This was provided in a dry film thickness (DFT) of 250 µm.

As gloss finish primer the following were used:
GFP1 a white two-component epoxy/amine resin coating (1001 type) having a PVC of approx. 37%. This is a comparative GFP.
GFP2 a white acrylic polyurethane resin coating having a PVC of 33.7 %. This is a comparative GFP.
GFP3 a white two-component acrylic polyurethane resin coating having a PVC of 17.6 %. This is a comparative GFP.
GFP4 a white epoxy-acrylic resin coating; the GPF having a PVC of 12.1 %. This is a comparative GFP.
GFP5 a white acrylic polysiloxane resin coating having a PVC of 9.1 %. This is a comparative GFP.
GFP6 a white amine cured epoxy resin coating having a PVC of 42.2 %. This is a comparative GFP.
GFP7 a white polyester polyurethane resin coating having a PVC of 15 %. This is a comparative GFP.
GFP8 a white epoxy resin coating having a PVC of 25 %. This was found out to remain sticky and is hence not considered suitable as GFP. This is a comparative GFP.
GFP9 a white two-component acrylic polyurethane resin coating having a PVC of 18.8 %. The white pigment was supplied as a toner of the pigment dispersed in a polyester polyol. This GFP is according to the invention. GFP9b is a corresponding coating but with blue toner pigment instead of white, and with a PVC of 4.5%.

These were provided in a dry film thickness (DFT) of 100 microns.

As undercoat the following was used:
UC1 Awlgrip^{™} 545 being a two-component epoxy/amine resin coating (1001 type) having a PVC of approx. 37%. This was provided in a dry film thickness (DFT) of 75 microns.

As showcoat the following were used:
SC1 Awlgrip^{™} Topcoat being a polyester polyurethane resin coating. This was provided in a dry film thickness (DFT) of 50 microns.

As topcoat the following were used:
TC1 Awlgrip^{™} Topcoat being a polyester polyurethane resin coating. This was provided in a dry film thickness (DFT) of 50 micrometer.

### Experiments

Aluminum substrate was coated with a high build primer which was based on 1001 type solid epoxy / amine chemistry, with baryte and talc as fillers. The PVC was 55% and the VOC content was 359g/l. Two layers were sprayed, each layer having a thickness of 370 microns. After curing, the coating was sanded with 240grit. Two coating layers of GFP of table 1 were sprayed on the sanded high build layer to give a total dft of 100 µm. The 60° Gloss and DOI were determined for the second GFP layer, and sandability was determined for the first GFP layer. Data are shown in Table 1.

**Table 1 - Properties of the first GFP coating layer**

| GFP | resin type | PVC(%) | 60° Gloss of GFP | DOI of GFP | Sandability of GFP | VOC (g/L) |
|---|---|---|---|---|---|---|
| GFP1* | epoxy/amine | 37 | 17.9 | n.m. | Good | 581 |
| GFP2* | acrylic polyurethane | 33.7 | 90.2 | 73.6 | Good | 310 |
| GFP3* | acrylic polyurethane | 17.6 | 97.3 | n.m. | Good | 440 |
| GFP4* | epoxy/acrylic | 12.1 | 59.9 | n.m. | Good | 409 |
| GFP5* | acrylic polysiloxane | 9.1 | 77.8 | n.m. | Good | 176 |
| GFP6* | epoxy | 42.2 | 102 | 73.2 | Good | 350 |
| GFP7* | polyester polyurethane | 15 | 94.2 | 91.7 | No | 420 |
| GFP8* | epoxy | 25 | n.m. | n.m. | No | 420 |
| GFP9 | acrylic polyurethane | 18.8 | 85.4 | 94.5 | Good | 420 |

| | | | | | | |
|---|---|---|---|---|---|---|
| * comparative examples | | | | | | |

It can be understood from Table 1 that only GFP9 has good results of gloss, DOI and sandability. This is due to the acrylic polyurethane as binder resin, combined with a specific range of PVC depending on the colour of the pigment. A superyacht coating was obtained by successively applying coating layers as shown in Table 2. DOI on the superyacht coating was measured and DOI reduction on the superyacht coating was determined, as shown in Table 2.

**Table 2 - Superyacht coating schemes and properties**

| Full coating # | PF | FF | HBP | UC | GFP | SC | TC | DOI | DOI reduction |
|---|---|---|---|---|---|---|---|---|---|
| CEx1 | PF1 | FF1 | HBP1 | UC1 | - | SC1 | TC1 | 96.5 | 0.3 |
| CEx2 | PF1 | FF1 | HBP1 | UC1 | - | - | TC1 | 94.5 | 1.7 |
| CEx3 | PF1 | FF1 | HBP1 | UC1 | GFP9 | - | TC1 | 96.2 | 0.7 |
| Ex4 | PF1 | FF1 | HBP1 | - | GFP9 | - | TC1 | 96. 3 | 1.5 |
| CEx5 | PF2 | FF2 | HBP1 | UC1 | - | - | TC1 | 93.9 | 3.8 |
| CEx6 | PF2 | - | HBP1 | UC1 | - | - | TC1 | 94.9 | 2.3 |
| CEx7 | PF2 | - | HBP1 | UC1 | GFP9 | - | TC1 | 95.2 | 0.8 |
| CEx8 | PF2 | - | HBP1 | UC1 | GFP9 | - | TC1 | 94. 7 | 1.5 |
| Ex9 | PF2 | - | HBP1 | - | GFP9 | - | TC1 | 95.9 | 1.7 |
| CEx10 | PF1 | FF1 | - | UC1 | - | - | TC1 | 91.6 | 4.8 |
| CEx11 | PF2 | - | - | UC1 | - | - | TC1 | 79.0 | 2.2 |
| CEx12 | PF1 | - | - | UC1 | - | - | TC1 | 78.8 | 3.8 |
| Ex13 | PF1 | FF1 | HBP1 | - | GFP9b | - | TC1 | 94.6 | 4.0 |
| CEx14 | PF1 | FF1 | - | - | GFP9b | - | TC1 | 87.5 | 12.6 |

| | | | | | | | | | |
|---|---|---|---|---|---|---|---|---|---|
| Ex = Example; CEx = Comparative Example | | | | | | | | | |

It can be understood that full superyacht coatings made using HBP and GFP9 have a high DOI and a low DOI reduction compared to those made without the GFP9 (e.g. compare CEx2 vs Ex4, and CEx6 vs Ex9). The results also indicate that improved properties are exhibited when a high build primer is used compared to compositions absent a high build primer (e.g. compare CEx14 vs Ex13). The results further show that good appearance is possible without the need for an undercoat (e.g. compare CEx3 vs Ex4, CEx7 and CEx8 vs Ex9).

## Claims

1. A gloss finish primer (GFP) for use in coating of a superyacht, wherein the GFP comprises
a) an acrylic polyol as a binder resin,
b) a pigment and
c) an isocyanate as a curing agent;
and wherein the GFP complies with the following requirements:
i) a gloss at 60° measured on two dried layers of GFP according to ISO 2813:2014 of at least 80 gloss units (GU), and
ii) a distinction of image (DOI) measured on two dried layers of GFP according to ASTM E430:2019 of at least 80.

2. The gloss finish primer according to claim 1, wherein the pigment is a white pigment and wherein the GFP has a pigment volume concentration (PVC) of between 18.0 and 30.0 %.

3. The gloss finish primer according to claim 1, wherein the pigment is a non-white pigment, for example a blue pigment or a black pigment, and wherein the GFP has a pigment volume concentration (PVC) of between 3.0 and 7.0 %.

4. The gloss finish primer according to any one of the preceding claims, further complying with the requirement of the amount of volatile organic compounds (VOC) of less than 420 grams per liter (g/l).

5. The gloss finish primer according to any one of the preceding claims, wherein the GFP comprises a toner comprising the pigment dispersed in a resin.

6. The gloss finish primer according to any one of the preceding claims, wherein the GFP complies with the following requirements:
i) a gloss at 60° measured on two dried layers dried coating of GFP according to ISO 2813:2014 of at least 85 gloss units (GU), and
ii) a distinction of image (DOI) measured on two dried layers of GFP according to ASTM 430:2019 of at least 85.

7. A method for coating a superyacht, the method comprising the successive steps of:
a) providing a superyacht with a high build primer as an outer coating layer;
b) optionally applying an undercoat layer;
c) applying a coating layer of the gloss finish primer (GFP) according to any one of claims 1 to 6; and
d) applying a coating layer of a topcoat to obtain a superyacht coating.

8. The method according to claim 7, in which the method for coating a superyacht comprises the successive steps of:
A) optionally applying a coating layer of an anti-corrosive primer;
B) applying a coating layer of a profiling filler;
C) optionally applying a coating layer of a finishing filler;
D) applying a coating layer of a high build primer;
E) applying a coating layer of the gloss finish primer (GFP) according to any one of claims 1 to 6; and
F) applying a coating layer of a topcoat to obtain a superyacht coating.

9. The method according to claim 7, further comprising drying and/or curing of the coating layers according to step a) and/or b) and/or c) and/or d), preferably after each step a), b), c) and d), the coating layer is dried and/or cured.

10. The method according to claim 8, further comprising drying and/or curing of the coating layers according to step A) and/or B) and/or C) and/or D) and/or E) and/or F), preferably after each step A), B), C), D), E) and F), the coating layer is dried and/or cured.

11. The method according to claim 9 or claim 10, in which the coating layer of topcoat is dried and/or cured or all the coating layers are dried and/or cured.

12. The method according to claim 11, wherein the superyacht coating has a distinction of image (DOI) according to ASTM 430:2019 of at least 80, preferably at least 85, more preferably at least 90, most preferably at least 92.

13. The method according to any one of claims 7 to 12, in which the coating layers are applied to part of or all of the above-waterline external surface of the superyacht.

14. A superyacht comprising a superyacht coating that has been applied according to the method of any one of claims 7 to 13.

15. The superyacht according to claim 14, in which the superyacht coating is applied to part of or all of the above-waterline surface of the superyacht.

## Patentansprüche

1. Glanzfinish-Grundierung (GFP) zur Verwendung bei Lackieren einer Superjacht, wobei die GFP umfasst
a) ein Acrylpolyol als Bindemittelharz,
b) ein Pigment und
c) ein Isocyanat als Härter;
und wobei die GFP den folgenden Anforderungen entspricht:
i) ein Glanz bei 60°, gemessen an zwei getrockneten GFP-Schichten nach ISO 2813:2014, von mindestens 80 Glanzeinheiten (GU) und
ii) eine Reflexionsbildschärfe (DOI), gemessen an zwei getrockneten GFP-Schichten nach ASTM E430:2019, von mindestens 80.

2. Glanzfinish-Grundierung nach Anspruch 1, wobei das Pigment ein weißes Pigment ist und wobei die GFP eine Pigment-Volumenkonzentration (PVC) von zwischen 18,0 und 30,0 % aufweist.

3. Glanzfinish-Grundierung nach Anspruch 1, wobei das Pigment ein nichtweißes Pigment ist, beispielsweise ein blaues Pigment oder ein schwarzes Pigment, und wobei die GFP eine Pigment-Volumenkonzentration (PVC) von zwischen 3,0 und 7,0 % aufweist.

4. Glanzfinish-Grundierung nach einem der vorstehenden Ansprüche, die ferner der Anforderung der Menge an flüchtigen organischen Verbindungen (VOC) von weniger als 420 Gramm pro Liter (g/l) entspricht.

5. Glanzfinish-Grundierung nach einem der vorstehenden Ansprüche, wobei die GFP einen Toner umfasst, der das Pigment in einem Harz dispergiert umfasst.

6. Glanzfinish-Grundierung nach einem der vorstehenden Ansprüche, wobei die GFP den folgenden Anforderungen entspricht:
i) ein Glanz bei 60°, gemessen an zwei getrockneten Schichten einer getrockneten GFP-Lackierung nach ISO 2813:2014, von mindestens 85 Glanzeinheiten (GU), und
ii) eine Reflexionsbildschärfe (DOI), gemessen an zwei getrockneten GFP-Schichten nach ASTM 430:2019, von mindestens 85.

7. Verfahren zum Lackieren einer Superjacht, wobei das Verfahren die aufeinanderfolgenden Schritte umfasst:
a) Auftragen einer dickschichtigen Grundierung als äußere Lackschicht auf eine Superjacht;
b) gegebenenfalls Auftragen einer Unterlackschicht;
c) Auftragen einer Lackschicht aus der Glanzfinish-Grundierung (GFP) nach einem der Ansprüche 1 bis 6; und
d) Auftragen einer Lackschicht aus einem Decklack, um eine Superjachtlackierung zu erhalten.

8. Verfahren nach Anspruch 7, wobei das Verfahren zum Lackieren einer Superjacht die aufeinanderfolgenden Schritte umfasst:
A) gegebenenfalls Auftragen einer Lackschicht aus einer Korrosionsschutzgrundierung;
B) Auftragen einer Lackschicht aus einem Profilierungsfüllstoff;
C) gegebenenfalls Auftragen einer Lackschicht aus einem Veredelungsfüllstoff;
D) Auftragen einer Lackschicht aus einer dickschichtigen Grundierung;
E) Auftragen einer Lackschicht aus der Glanzfinish-Grundierung (GFP) nach einem der Ansprüche 1 bis 6; und
F) Auftragen einer Lackschicht aus einem Decklack, um eine Superjachtlackierung zu erhalten.

9. Verfahren nach Anspruch 7, ferner umfassend Trocknen und/oder Härten der Lackschichten gemäß Schritt a) und/oder b) und/oder c) und/oder d), wobei vorzugsweise nach jedem Schritt a), b), c) und d) die Lackschicht getrocknet und/oder gehärtet wird.

10. Verfahren nach Anspruch 8, ferner umfassend Trocknen und/oder Härten der Lackschichten gemäß Schritt A) und/oder B) und/oder C) und/oder D) und/oder E) und/oder F), wobei vorzugsweise nach jedem Schritt A), B), C), D), E) und F) die Lackschicht getrocknet und/oder gehärtet wird.

11. Verfahren nach Anspruch 9 oder Anspruch 10, wobei die Decklackschicht getrocknet und/oder gehärtet wird oder alle Lackschichten getrocknet und/oder gehärtet werden.

12. Verfahren nach Anspruch 11, wobei die Superjachtlackierung eine Reflexionsbildschärfe (DOI) nach ASTM 430:2019 von mindestens 80, vorzugsweise mindestens 85, bevorzugter mindestens 90, höchst bevorzugt mindestens 92 aufweist.

13. Verfahren nach einem der Ansprüche 7 bis 12, wobei die Lackschichten auf einen Teil der oder die gesamte oberhalb der Wasserlinie liegende Außenfläche der Superjacht aufgetragen werden.

14. Superjacht, die eine nach dem Verfahren nach einem der Ansprüche 7 bis 13 aufgetragene Superjachtlackierung umfasst.

15. Superjacht nach Anspruch 14, wobei die Superjachtlackierung auf einen Teil der oder die gesamte oberhalb der Wasserlinie liegende Oberfläche der Superjacht aufgetragen ist.

## Revendications

1. Apprêt de finition brillant (GFP) destiné à être utilisé dans le revêtement d'un superyacht, dans lequel le GFP comprend
a) un polyol acrylique en tant que résine liante,
b) un pigment et
c) un isocyanate comme agent de durcissement ;
et dans lequel le GFP satisfait aux exigences suivantes :
i) un brillant à 60° mesuré sur deux couches séchées de GFP selon la norme ISO 2813:2014 d'au moins 80 unités de brillance (GU), et
ii) une distinction d'image (DOI) mesurée sur deux couches séchées de GFP selon la norme ASTM E430:2019 d'au moins 80.

2. Apprêt de finition brillant selon la revendication 1, dans lequel le pigment est un pigment blanc et dans lequel le GFP a une concentration volumique de pigment (PVC) comprise entre 18,0 et 30,0 %.

3. Apprêt de finition brillant selon la revendication 1, dans lequel le pigment est un pigment non blanc, par exemple un pigment bleu ou un pigment noir, et dans lequel le GFP a une concentration volumique de pigment (PVC) comprise entre 3,0 et 7,0 %.

4. Apprêt de finition brillant selon l'une quelconque des revendications précédentes, satisfaisant en outre à l'exigence de la quantité de composés organiques volatils (COV) inférieure à 420 grammes par litre (g/l).

5. Apprêt de finition brillant selon l'une quelconque des revendications précédentes, dans lequel le GFP comprend un toner comprenant le pigment dispersé dans une résine.

6. Apprêt de finition brillant selon l'une quelconque des revendications précédentes, dans lequel le GFP répond aux exigences suivantes :
i) une brillance à 60° mesurée sur deux couches séchées de revêtement séché de GFP selon la norme ISO 2813:2014 d'au moins 85 unités de brillance (GU), et
ii) une distinction d'image (DOI) mesurée sur deux couches séchées de GFP selon la norme ASTM 430:2019 d'au moins 85.

7. Procédé de revêtement d'un superyacht, le procédé comprenant les étapes successives de :
a) fourniture à un superyacht d'un apprêt garnissant en tant que couche de revêtement externe ;
b) éventuellement application d'une sous-couche ;
c) application d'une couche de revêtement de l'apprêt de finition brillant (GFP) selon l'une quelconque des revendications 1 à 6 ; et
d) application d'une couche de revêtement d'un revêtement de finition pour obtenir un revêtement de superyacht.

8. Procédé selon la revendication 7, dans lequel le procédé de revêtement d'un superyacht comprend les étapes successives de :
A) éventuellement application d'une couche de revêtement d'un apprêt anticorrosion ;
B) application d'une couche de revêtement d'un enduit de profilage ;
C) éventuellement application d'une couche de revêtement d'un enduit de finition ;
D) application d'une couche de revêtement d'un apprêt garnissant ;
E) application d'une couche de revêtement de l'apprêt de finition brillant (GFP) selon l'une quelconque des revendications 1 à 6 ; et
F) application d'une couche de revêtement d'un revêtement de finition pour obtenir un revêtement de superyacht.

9. Procédé selon la revendication 7, comprenant en outre le séchage et/ou le durcissement des couches de revêtement selon l'étape a) et/ou b) et/ou c) et/ou d), préférablement après chaque étape a), b), c) et d), la couche de revêtement est séchée et/ou durcie.

10. Procédé selon la revendication 8, comprenant en outre le séchage et/ou le durcissement des couches de revêtement selon l'étape A) et/ou B) et/ou C) et/ou D) et/ou E) et/ou F), préférablement après chaque étape A), B), C), D) E) et F), la couche de revêtement est séchée et/ou durcie.

11. Procédé selon la revendication 9 ou la revendication 10, dans lequel la couche de revêtement du revêtement de finition est séchée et/ou durcie ou toutes les couches de revêtement sont séchées et/ou durcies.

12. Procédé selon la revendication 11, dans lequel le revêtement de superyacht a une distinction d'image (DOI) selon la norme ASTM 430:2019 d'au moins 80, de préférence au moins 85, plus préférablement au moins 90, de manière préférée entre toutes au moins 92.

13. Procédé selon l'une quelconque des revendications 7 à 12, dans lequel les couches de revêtement sont appliquées sur une partie ou la totalité de la surface externe située au-dessus de la ligne de flottaison du superyacht.

14. Superyacht comprenant un revêtement de superyacht qui a été appliqué selon le procédé de l'une quelconque des revendications 7 à 13.

15. Superyacht selon la revendication 14, dans lequel le revêtement de superyacht est appliqué sur une partie ou la totalité de la surface au-dessus de la ligne de flottaison du superyacht.
